# EUROPÄISCHE PATENTANMELDUNG

(11) **EP 1 655 645 A2**
(43) Veröffentlichungstag der Anmeldung: **10.05.2006**
(21) Anmeldenummer: 05109663.4
(22) Anmeldetag: 18.10.2005
(51) Int. Cl.: G05B 19/042, G05B 9/02

(54) **Vorrichtung zur Kommunikation mit einer Anlage**

(30) Priorität: 19.10.2004 DE 102004050908
(71) Anmelder: SIEMENS AKTIENGESELLSCHAFT, 80333 München (DE)
(72) Erfinder: Halfmann, Ulrich, 91094 Bräuningshof (DE); Liu, Shimei, 90419 Nürnberg (DE)

(57) **Zusammenfassung**

Die Erfindung betrifft eine Vorrichtung zur Kommunikation mit einer Anlage (1,17). Die Vorrichtung weist ein mobiles Kommunikationsgerät (12,27) zum kabelgebundenen oder drahtlosen Datenaustausch mit der Anlage (1,17) und ein Not-Aus-Taster (4,20) auf, welcher in einem Not-Aus-Teil (11,26) integriert ist, wobei das Not-Aus-Teil (4,20) fest verdrahtet mit der Anlage verbunden ist und über eine mechanische Koppelverbindung (16,31) fest mit dem mobilen Kommunikationsgerät gekoppelt eine tragbare Funktionseinheit bildet, die ortsveränderlichen Bedien- und Beobachtungsaufgaben dient.

## Beschreibung

Die Erfindung bezieht sich auf eine Vorrichtung zur Kommunikation mit einer Anlage, insbesondere zum Bedienen und Beobachten einer Automatisierungsanlage, Fertigungsanlage oder Maschine.

Automatisierungs-, Fertigungs- und Prozessanlagen sowie Maschinen - im Weiteren kurz Anlagen genannt - werden über Bedien- und Beobachtungsgeräte gesteuert und überwacht. Bedien-oder auch Eingabegeräte sind beispielsweise Schalter, Taster, Drehknöpfe, Tastaturen, berührungssensitive Bildschirme, die es dem Bediener der Anlage gestatten auf die Anlage einzuwirken. Beobachtungs- oder Ausgabegeräte sind beispielsweise Kontrollleuchten, alphanumerische oder grafische Anzeigen, die dem Bediener Anlagenzustände signalisieren. Moderne Anlagen weisen zur Bedienung- und Beobachtung i.d.R. kompakte, rechnergestützte, grafische, bildschirmbasierte Geräte auf, in denen Ein- und Ausgabefunktionen integriert sind und die über definierte Schnittstellen mit der Anlage kommunizieren. Diese Bedien- und Beobachtungsgeräte sollen im Folgenden kurz als Kommunikationsgeräte bezeichnet werden.

Kommunikationsgeräte können fest mit der Anlage verbunden sein, d.h. der Datenaustausch erfolgt über eine fest installierte Anschlussleitung. Durch verteilte Anschlusspunkte in der Umgebung der Anlage können solche Kommunikationsgeräte auch mobil und ortsveränderlich eingesetzt werden. In diesem Falle wird das Kommunikationsgerät an die Schnittstelle des Anschlusspunktes angeschlossen und steht dann nach Anmeldung im System für Bedien- und Beobachtungsaufgaben zur Verfügung. Dabei ist das Kommunikationsgerät i.d.R fest mit einem Kabel verbunden, die Verbindung mit der Anlage erfolgt über Steckverbindungen am Anschlusspunkt.

Um den Verkabelungsaufwand für Anschlusspunkte zu vermeiden bzw. um den Freiheitsgrad bezüglich Mobilität und Ortsveränderlichkeit zu erhöhen, können auch drahtlos arbeitende Kommunikationsgeräte eingesetzt werden. In diesem Fall werden eine oder mehrere Sende- und Empfangseinheiten fest mit der Anlage verbunden. Die batteriebetriebenen Kommunikationsgeräte tauschen Daten über Funkverbindungen mit der zugeordneten Sende- und Empfangseinheiten aus und ermöglichen auf diese Weise eine im Bereich der Funkverbindung beliebig ortsveränderliche Bedien- und Beobachtungsstation.

Aufgrund verschiedener Normen und Vorschriften aus der Industrie müssen Anlagen mit Stopp-Tastern versehen werden. Die europäische Norm EN 60204-1 unterscheidet verschiedene Stopp-Kategorien, wobei sich in Kategorie 0 der Stopp als ein ungesteuertes Stillsetzen der Anlage durch sofortige Abschaltung der Energiezufuhr, in Kategorie 1 der Stopp als ein gesteuertes Stillsetzen durch Unterbrechung der Energiezufuhr nach Stillstand der Anlage und in Kategorie 2 der Stopp als ein gesteuertes Stillsetzen der Anlage bei der die Energiezufuhr nach Stillstand nicht unterbrochen wird definiert. Dabei ist nur der Stopp gemäß Kategorie 0 als Not-Aus zugelassen und als solcher entsprechend der Norm zu kennzeichnen. Er muss unabhängig und autark vom Kommunikationsgerät arbeiten.

Kommunikationsgeräte insbesondere so genannte HMI-Panel (Human Machine Interface-Panel) haben neben grafischen Anzeigeschirmen und Bedientasten auch Tasten, die den Stopp- bzw. Not-Aus der Anlage bewirken. Da die Kommunikationsgeräte entweder über ein separates, i.d.R. steckbares und seriell Daten übertragendes Kabel an definierten Anschlusspunkten der Anlage oder über Funkverbindung an die Anlage angeschlossen sind und dadurch ein autarkes Funktionieren nicht zweifelsfrei gewährleistet ist, ist eine Not-Aus-Funktion und eine entsprechende Kennzeichnung gemäß der Norm nicht zulässig. Deshalb wurde bisher auch auf eine als solche gekennzeichnete Not-Aus Taste am Kommunikationsgerät verzichtet und Kommunikationsgeräte, insbesondere HMI-Panel weisen ausschließlich normale Stopp-Taster auf, die dann oft gesteuerte und damit softwaregestützte Stopps auslösen.

In der Praxis ist überwiegend nicht zu erkennen, welche Stopp-Sequenz mit Betätigen dieser Stopp-Tasten ausgelöst wird. Bei geeigneter Programmierung kann diese durchaus die gleiche Wirkung wie ein Not-Stopp entfalten. Damit ergibt sich das Problem, dass viele Anwender, insbesondere bei wechselndem Personal, die genaue Wirkung der Stopp-Taster nicht genau kennen und im Gefahrenfall nach einem Not-Aus-Taster suchen, anstatt den Stopp-Taster zu betätigen.
Das Problem im Unterschied zwischen Stopp- und Not-Aus-Tastern besteht in diesem Fall also weniger in der Wirkung, sondern eher in der Erkennbarkeit. Ein weiteres Problem ergibt sich aus der ständigen Aktivität und Verfügbarkeit von Stopp-Tastern mit Not-Aus-Funktion. Sie müssen unabhängig sicher und autark arbeiten. Dies können Stopp-Taster auf einem Kommunikationsgerät nicht sicherstellen. Kommunikationsgeräte als solche und ihre Kommunikationsmechanismen besitzen wegen ihrer höheren Komplexität im Vergleich zu hardverdrahteten Not-Aus-Ketten eine höhere Fehleranfälligkeit. Diese steigt durch umfangreiche anlagenspezifische Softwareimplementierungen weiter an. Damit ergeben sich zum Teil massive Einschränkungen aus der Verfügbarkeit der Kommunikationsgeräte selbst, der Kommunikationsstrecken bzw. aus der Software.

In einer Anmeldung mit älterem Zeitrang wird eine Einrichtung angegeben, bei der die sicherheitsrelevante Handhabung eines mobilen Kommunikationsgerätes vereinfacht wird. Es wird eine funkbasierte Kommunikation mit einer Anlage beschrieben, bei der ein normungsgerecht gekennzeichneter und in einen sicheren Not-Aus-Kreis eingeschleifter Not-Aus-Taster in einer Ablage zum Aufladen des funkbasierten Kommunikationsgerätes (Docking Station) angeordnet ist. Diese Einrichtung stellt nach Einlegen des Kommunikationsgerätes in die Docking Station eine ortsgebundene Bedieneinheit mit Not-Aus-Taster dar.

Nachteiligerweise wird diese normkonforme Bedieneinheit mit dem Herausnehmen des Kommunikationsgerätes aus der Docking Station sofort wieder aufgelöst.

Aufgabe der vorliegenden Erfindung ist es eine Vorrichtung zur Kommunikation mit einer Anlage anzugeben, die unaufwändig herstell- und handhabbar eine den Industrienormen konforme Ausstattung eines kabelgebunden oder drahtlos arbeitenden Kommunikationsgerätes mit einer Not Aus Funktion gewährleistet und eine zumindest in einem definierten Bedien- und Beobachtungsbereich ortsveränderliche und tragbare Funktionseinheit bildet. Aufgrund der räumlich wechselnden Bedien- und Beobachtungsaufgaben für Kommunikationsgeräte ist die mit Not-Aus-Taster ausgestattete tragbare Funktionseinheit auch wieder auflösbar zu gestalten.

Die Aufgabe wird erfindungsgemäß durch eine Vorrichtung zur Kommunikation mit einer Anlage gelöst, welche mindestens ein mobiles Kommunikationsgerät das Daten mit der Anlage austauscht und mindestens einen Not-Aus-Taster aufweist und dadurch gekennzeichnet ist, dass der Not-Aus-Taster in einem Not-Aus-Teil integriert ist, wobei das Not-Aus-Teil fest verdrahtet mit der Anlage verbunden ist und über eine mechanische Koppelverbindung fest mit dem mobilen Kommunikationsgerät gekoppelt eine tragbare Funktionseinheit bildet, die ortsveränderlichen Bedien- und Beobachtungsaufgaben dient. Das Not-Aus-Teil ist kompakt aufgebaut und besteht im Wesentlichen aus einem Gehäuse, dem Not-Aus-Taster und Verbindungsmitteln. Nach Beendigung der Bedien- und Beobachtungsaufgaben kann die mechanische Koppelverbindung wieder gelöst werden und das Kommunikationsgerät kann an andere Not-Aus-Teile angeschlossen werden um in deren Umgebung weitere Bedien- und Beobachtungsaufgaben durchzuführen.

Aufgrund der kompakten Ausführung des Not-Aus-Teils, das sich ergonomisch an das mobile Kommunikationsgerät anpasst, entsteht sehr vorteilhaft eine schnell herstellbare und gut handhabbare Funktionseinheit. Ein wesentlicher Vorteil dieser Funktionseinheit ist es, dass damit sowohl Forderungen nach Normkonformität als auch nach Ortsveränderlichkeit erfüllt werden können. Eine Überwachung der Anlage wird sicherer, Verwechslungen im Gefahrenfall werden ausgeschlossen, da der Not-Aus-Taster als solcher markiert und gekennzeichnet werden kann. Durch die feste Verbindung von Not-Aus-Teil und Not-Aus-Taster mit der Anlage ist gewährleistet, dass der Not-Aus-Taster zum Stoppen der Anlage sowohl im gekoppelten als auch im entkoppelten Zustand in den Not-Aus-Kreis eingeschleift und damit als Stopp Funktion immer aktiv bleibt. Dies ist ein wesentlicher Vorteil gegenüber heute verwendeten mobilen Kommunikationsgeräten mit Stopp-Tastern, die über Stecker an den Kabelenden auf Anschlussdosen der Anlage aufgesteckt werden. Mit Lösen dieser Verbindung sind auch die Stopp-Taster auf dem mobilen Kommunikationsgerät inaktiv. In der erfindungsgemäßen Vorrichtung wird diese lösbare Schnittstelle nunmehr zwischen Stoppfunktion und sonstiger Bedien-und Beobachtungsfunktion verlagert.

In einer bevorzugten Ausführungsform wird die vorbeschriebene Vorrichtung in Verbindung mit einem drahtlos und funkbasiert mit der Anlage kommunizierenden mobilen Kommunikationsgerät eingesetzt. Wegen der drahtlosen funkbasierten Kommunikation sind nach Kopplung des Kommunikationsgerätes mit dem Not-Aus-Teil keine weiteren Maßnahmen notwendig, da beide Teile autark voneinander arbeiten, durch die mechanische Kopplung jedoch eine ergonomische und normungskonforme Bedieneinheit bilden.

In einer besonders bevorzugten Ausführungsform ist die Koppelverbindung zwischen Not-Aus-Teil und Kommunikationsgerät auch geeignet elektrische Daten zu übertragen. Damit kann erfindungsgemäß das Kommunikationsgerät über das Not-Aus-Teil mit der Anlage kommunizieren. Dies ist insbesondere im Hinblick auf den Einsatz kabelgebundener Kommunikationsgeräte von Vorteil, da der Anschluss einer sonst notwendigen separaten Kommunikationsleitung entfallen kann, da über das Not-Aus-Teil und das zwischen Not-Aus-Teil und Anlage verlaufende Kabel kommuniziert wird. Wegen der i.d.R. seriellen Datenübertragung ist auch bei zusätzlicher Nutzung des Kabels durch das Kommunikationsgerät die Flexibilität der Leitung nicht eingeschränkt. Ferner ist ein normungswidriger Betrieb der Anlage nicht möglich, da in diesem Falle Not-Aus-Teil und Kommunikationsgerät nur als Einheit zu betreiben sind. In dieser Ausführungsform ist auch ein kabelgebundenes Kommunikationsgerät besonders leicht handhabbar, es ergeben sich im gekoppelten Zustand in dieser Funktionseinheit keinerlei Einschränkungen gegenüber drahtgebundenen Kommunikationsgeräten. Auch für den Fall der Kopplung eines drahtlosen und funkbasierten Kommunikationsgerätes mit dem Not-Aus-Teil ist eine Kommunikation zwischen Kommunikationsgerät und Not-Aus-Teil von Vorteil, da beispielsweise sich auf dem Kommunikationsgerät befindliche Stopp-Taster mit gleicher Aus-Funktion wie der Not-Aus in den kabelgebundenen Not-Aus-Kreis einschleifen lassen und so eine sichere Funktion unabhängig von der Güte des Datenaustauschs zwischen Kommunikationsgerät und Empfangs- und Sendeeinheit gewährleisten.

Eine weitere bevorzugte Variante ergibt sich, indem das Not-Aus-Teil über eine flexible und nicht fest verlegte Leitung oder über eine Kombination aus fest verlegter und flexibler Leitung fest mit der Anlage verbunden ist. Hierdurch kann leicht eine normgerechte und ortsveränderliche Bedieneinheit aus Not-Aus-Teil und Kommunikationsgerät im durch die freie Länge der flexiblen Leitung definierten Bereich geschaffen werden.

In einer weiteren bevorzugten Ausführungsform kommuniziert das Not-Aus-Teil im gekoppelten Zustand über die Koppelverbindung mit dem Kommunikationsgerät. Damit kann beispielsweise vorteilhaft der Not-Aus-Taster selbst vom Kommunikationsgerät überwacht und Störungen bzw. Auslösen des Not-Aus-Tasters auf dem Kommunikationsgerät angezeigt werden.

In einer besonders bevorzugten Ausführungsform kann das mobile Kommunikationsgerät über die Koppelverbindung und die flexible Anschlussleitung zur Anlage im gekoppelten Zustand stromversorgt werden. Damit könnte die Einsatzdauer von batteriebetriebenen Kommunikationsgeräten wesentlich erhöht werden, das Wiederaufladen in einer Docking-Station könnte entfallen. Bei kabelgebundenen Kommunikationsgeräten könnte vorteilhaft eine gesonderte Stromversorgung entfallen.

In einer weiteren Variante weist die Kommunikationsvorrichtung einen Halter auf, der das Not-Aus-Teil einschließlich Kabel im vom Kommunikationsgerät entkoppelten Zustand aufnimmt. Befindet sich der Halter in unmittelbarer Nähe zur Anlage, wird auf diese Weise vorteilhaft ein weiterer "normaler" und aktiver Not-Aus-Taster bereitgestellt, wie er i.d.R. in der Umgebung der Anlage mehrfach fest montiert ist. Über geeignete und hinlänglich bekannte Aufnahmevorrichtungen für das Kabel, wie beispielsweise selbstaufwickelnde Vorrichtungen, werden leicht sichere Ordnungssysteme geschaffen.

Für drahtlos und funkbasiert arbeitende Kommunikationsgeräte sind Docking-Stationen bekannt, die verschiedene Aufgaben zu erfüllen haben. Beispielsweise werden Anmeldevorgänge des Kommunikationsgerätes für die jeweilige Anlage oder das Wiederaufladen der internen Akkumulatoren des Kommunikationsgerätes über Docking-Stationen durchgeführt. In einer vorteilhaften Ausführungsform ist der vorbeschriebene Halter in eine solche Docking-Station integriert. Das Not-Aus-Teil kann auf diese Weise im vom Kommunikationsgerät entkoppelten Zustand in die Docking-Station abgelegt werden. Wird das Not-Aus-Teil entnommen, so bleibt dies über eine flexible Leitung zwischen Docking-Station und Not-Aus-Teil mit der Anlage verbunden. In diesem Fall ist das Anschlusskabel des Not-Aus-Teiles zwischen Anlage und Docking-Station fest verlegt und wird in der Docking-Station bzw. im Halter mit dem flexiblen Kabel verbunden. In anderen Fällen ist das Not-Aus-Teil direkt und ohne weitere Klemmstellen mit der Anlage über ein flexibles Kabel verbunden ist. Hier kann von Vorteil sein, dass der Kabelweg des aus dem Halter entnommenen Not-Aus-Teils nicht über die Docking-Station geführt wird.

In weiteren Ausführungsvarianten werden das Kommunikationsgerät und das Not-Aus-Teil als solches beansprucht. Die Vorteile ergeben sich entsprechend aus den vorbeschriebenen Ausführungsformen für die Vorrichtung.

Die mit der Erfindung erzielten Vorteile bestehen insbesondere darin, dass eine Möglichkeit gegeben wird, mobiles Kommunikationsgerät und Not-Aus-Taster so zu kombinieren, dass eine mobile und im definierten Bereich ortsveränderliche Funktionseinheit entsteht, die eine den Normen entsprechende Not-Aus-Funktion bereitstellt. Insbesondere unter Sicherheitsaspekten entsteht eine Funktionseinheit, die hochverfügbar und damit im Gefahrenfall sicher anwendbar ist. Verwechslungen durch den Anwender werden nahezu ausgeschlossen, da eine normengerechte Kennzeichnung möglich wird.

Ein weiterer Vorteil ist, dass die Bedienphilosophie und Funktionsweise sowohl für kabelgebundene als auch für drahtlos arbeitende Kommunikationsgeräte nahezu die Gleiche ist und damit Fehlhandlungen bei gemischten Anlagen aufgrund unterschiedlicher Bedienungen ausgeschlossen werden können.

Nachfolgend werden Ausführungsbeispiele der Erfindung anhand von Zeichnungen näher erläutert. Darin zeigen:
- FIG 1: beispielhaft eine Anlage mit kabelgebundenem Kommunikationsgerät und angekoppelten Not-Aus-Teil,
- FIG 2: beispielhaft eine Anlage mit drahtlosem, funkgesteuertem Kommunikationsgerät und angekoppelten Not-Aus-Teil,
- FIG 3: beispielhaft einen Halter für ein Not-Aus-Teil,

- FIG 4: beispielhaft eine Docking-Station mit eingelegtem drahtlosem, funkgesteuerten Kommunikationsgerät,
- FIG 5: beispielhaft eine Docking-Station mit entnommenem funkgesteuerten Kommunikationsgerät

Einander entsprechende Teile sind in allen Figuren mit denselben Bezugszeichen versehen.

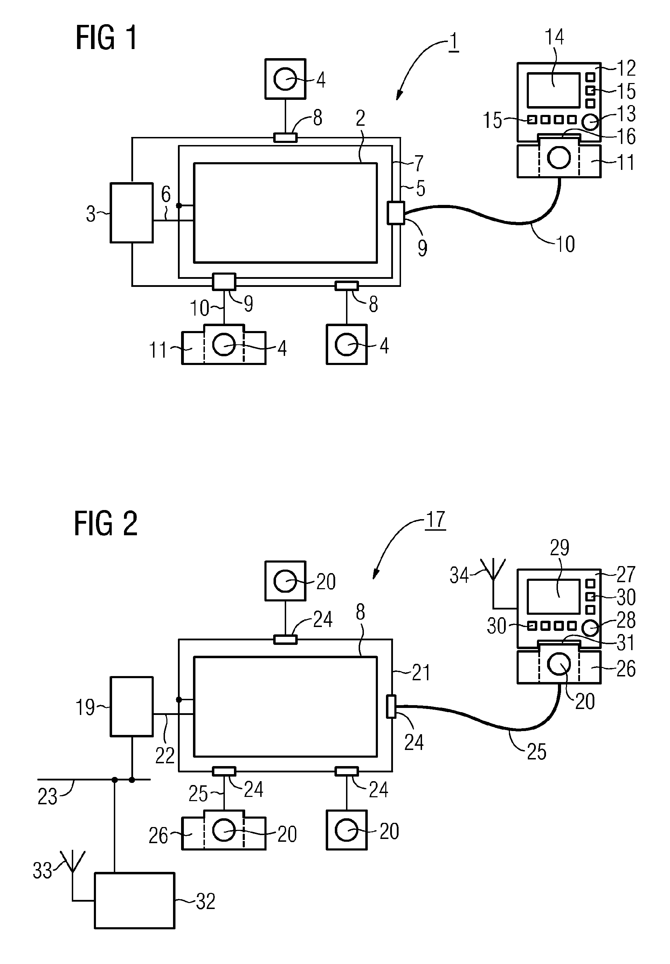

Die in FiG 1 dargestellte Anlage 1 ist mit dem mobilen kabelgebundenen Kommunikationsgerät 12 verbunden und tauscht mit diesem Daten zum Bedienen und Beobachten der Anlage 1 aus. Die Anlage 1 umfasst eine Maschine 2, die über einen Steuerkreis 6 mit einer die Maschine 2 steuernden Steuerung 3 verbunden ist. Die Anlage 1 weist ferner einen um die Maschine 2 verlaufenden Not-Aus-Kreis 5 und einen um die Maschine 2 verlaufenden Kommunikationskreis 7 auf. Der Not-Aus-Kreis 5 ist an verschiedenen Punkten mit den Anschlussstellen 8 und 9 fest verbunden. Der Kommunikationskreis ist nur mit den Anschlussstellen 9 fest verbunden. Über eine Anschlussstelle 8 ist jeweils ein Not-Aus-Taster 4 fest angeschlossen. Not-Aus-Taster 4 sind wegen der Verbindung der Anschlussstellen 9 zum Not-Aus-Kreis auch an diese anschließbar. Das Betätigen eines beliebigen Not-Aus-Tasters 4 bewirkt das ungesteuerte Stillsetzen der Maschine 2 durch sofortige Abschaltung der Energie zu den Maschinenantriebselementen.
An den Anschlussstellen 9 werden die Not-Aus-Teile 11 über die flexible Anschlussleitung 10 fest mit der Anlage verbunden. Das Not-Aus-Teil 11 weist ein Gehäuse auf, in welches ein Not-Aus-Taster 4 integriert ist. Der Not Aus Taster 4 ist entsprechend der Industrienorm gekennzeichnet. Ferner besitzt das Not-Aus-Teil 11 eine Koppelverbindung 16 über die das Kommunikationsgerät 12 mit dem Not-Aus-Teil 11 mechanisch verbunden und wieder gelöst werden kann. Die Koppelverbindung 16 kann zusätzlich auch für elektrische Verbindung von Kommunikationsgerät 12 und Not-Aus-Teil 11 ausgebildet sein. Zur elektrischen Kontaktierung sind entsprechende Kontaktelemente in die Koppelverbindung 16 integriert. Um die Koppelverbindung 16 gegen unbeabsichtigtes Lösen zu sichern, sind nicht näher beschriebene mechanische Halterungen vorgesehen. Über die Koppelverbindung 16, die flexible Anschlussleitung 10 und die Anschlussstelle 9 werden bei Anschluss eines kabelgebundenen Kommunikationsgerätes Daten vom Kommunikationsgerät 12 an die Steuerung 3 und zurück übertragen und falls erforderlich die Stromversorgung des Kommunikationsgerätes 12 gewährleistet. Über die flexible Anschlussleitung 10 ist weiterhin der Not-Aus-Taster 4 im Not-Aus-Teil 11 in den Not-Aus-Kreis 5 eingeschleift. Darüber hinaus können Daten aus der Not-Aus-Kette wie beispielsweise das Auslösen des Not-Aus-Tasters 4 im zugehörigen Not-Aus-Teil 11 oder die Überwachung des Not-Aus-Kreises 5 an das direkt angeschlossene Kommunikationsgerät 12 über die Koppelverbindung 16 geleitet werden. Der gesamte Kommunikationsweg vom Kommunikationsgerät 12 zur Steuerung 3 der Maschine 2 ist nur über die Koppelverbindung 16 lösbar, alle anderen Verbindungen sind fest verdrahtet. Dadurch ist gewährleistet, dass die Funktionseinheit aus Not-Aus-Teil und Kommunikationsgerät immer einen funktionierenden Not-Aus-Taster bietet. Das mobile Kommunikationsgerät 12 weist wie in FIG 1 dargestellt beispielhaft Ein- und Ausgabegeräte in Form des Bildschirmes 14 sowie der Tasten 13 und 15 auf, über die alle, zum Bedienen und Beobachten relevante Operationen ausführbar sind. Der dargestellte Stopp-Taster 13 kann in der dargestellten Ausführungsform zum gesteuerten Stillsetzen der Anlage dienen. Verwechslungen mit dem Not-Aus sind ausgeschlossen, der der Not-Aus als solcher gekennzeichnet ist. Das mobile Kommunikationsgerät 12 kann über die Koppelverbindung 16 leicht wieder vom Not-Aus-Teil 11 getrennt werden, ohne die Funktion des Not-Aus-Tasters 4 auf dem getrennten Not-Aus-Teil 11 zu beeinflussen. Das Kommunikationsgerät 12 kann an anderer Stelle mit einem anderen Not-Aus-Teil 11 zu Bedien- und Beobachtungszwecken verbunden werden.

FIG 2 zeigt einen der FIG 1 ähnlichen Anlagenaufbau mit einem drahtlosen, funkbasierten mobilen Kommunikationsgerät 27, welches wiederum Daten zum Bedienen und Beobachten der Anlage 17 austauscht. Die Anlage 17 umfasst eine Maschine 18, die über einen Steuerkreis 22 mit einer die Maschine 18 steuernde Steuerung 19 verbunden ist. Die Steuerung 19 ist über den kabelgebundenen Kommunikationskreis 23 mit der Sende- und Empfangseinheit 32 gekoppelt, über den zwischen Steuerung 19 und Sende- und Empfangseinheit 32 kommuniziert werden kann. Über die Antenne 33 der Sende- und Empfangseinheit 32 und die Antenne 34 des Kommunikationsgerätes 27 wird eine Funkstrecke aufrechterhalten, über die eine weitergehende Kommunikation zwischen Kommunikationsgerät 27 und Sende- und Empfangseinheit 32 ermöglicht wird. Die Anlage 17 weist ferner einen Not-Aus-Kreis 21 mit um die Maschine verteilten Anschlussstellen 24 auf, die fest auf den Not-Aus-Kreis verbunden sind. Über eine Anschlussstelle 24 wird jeweils ein Not-Aus-Taster 20 oder ein Not-Aus-Teil 26 fest in den Not-Aus-Kreis 21 eingeschleift. Das Not-Aus-Teil 26 weist ein Gehäuse, in welches ein Not-Aus-Taster 20 integriert ist und Mittel für eine mechanische und elektrische Koppelverbindung 31 zum Kommunikationsgerät 27 auf. Über die Koppelverbindung 31 kann das Not-Aus-Teil 26 mechanisch mit dem Kommunikationsgerät 27 verbunden werden. Die Koppelverbindung 31 kann zusätzlich auch für eine elektrische Verbindung zwischen Kommunikationsgerät 27 und Not-Aus-Teil 26 ausgebildet sein. Zur elektrischen Kontaktierung sind entsprechende Kontaktelement in der Koppelverbindung 31 vorgesehen, ferner ist die Koppelverbindung 31 gegen unbeabsichtigtes Lösen beispielsweise durch ein rastendes Rückhaltesystem gesichert. Das Not-Aus-Teil 26 ist fest an die flexible Anschlussleitung 25 angeschlossen, welche auf der anderen Kabelseite wiederum fest mit der Anschlussstelle 24 verbunden ist, der Not-Aus-Taster 20 des Not-Aus-Teils 26 ist somit in den Not-Aus-Kreis eingeschliffen und sowohl im mit dem Kommunikationsgerät 27 gekoppelten als auch ungekoppelten Zustand autark arbeitend aktiv. Das Betätigen eines beliebigen Not-Aus-Tasters 20 auch der im Not-Aus-Teil 26 bewirkt das ungesteuerte Stillsetzten der Maschine 18 durch sofortige Abschaltung der Energie, die Not-Aus-Taster 20 sind als solche entsprechend der Industrienorm gekennzeichnet.
Der Datenaustausch über die Koppelverbindung 31 ist im Vergleich zu der in FIG 1 dargestellten und dort beschriebenen Anlagenkonfiguration auf die Überwachung des Not-Aus-Kreises 21 bzw. des Auslösens des im angekoppelten Not-Aus-Teil 26 integrierten Not-Aus-Taster 20 begrenzt. Darüber hinaus ließe sich beispielsweise der Stopp-Taster 28 auf dem Kommunikationsgerät 27 zusätzlich in die Not-Aus-Kette einschleifen. Auch eine Stromversorgung des ansonsten batteriebetriebenen Kommunikationsgerätes 27 über die flexible Anschlussleitung 25 wäre im gekoppelten Zustand denkbar.

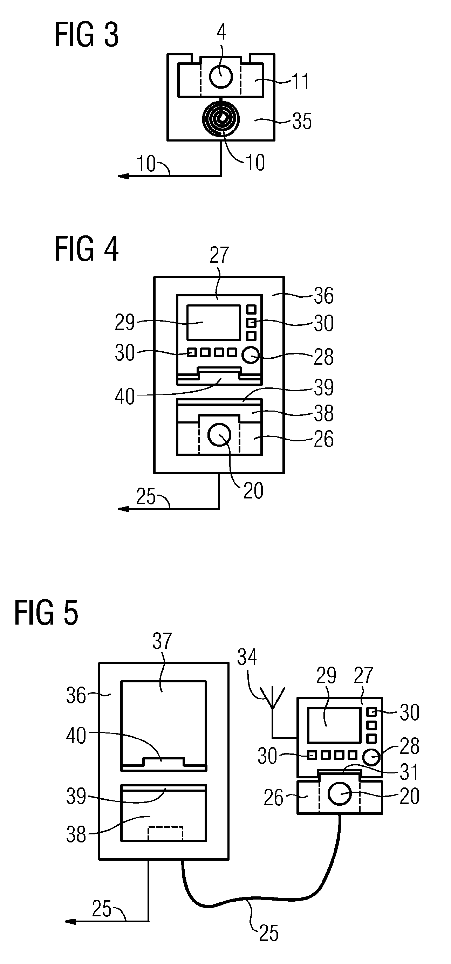

FIG 3 zeigt schematisch einen Halter 35 für das Not-Aus-Teil 11, 26. Der Halter 35 ist an der Maschine 2, 17 oder in der Nähe der Maschine 2, 17 fest angebracht. Er besteht im Wesentlichen aus einer Ablage, in der das Not-Aus-Teil 11, 26 eingelegt, eingeschoben oder eingedrückt werden kann. Nach Verbringen des Not-Aus-Teils 11, 26 in die Ablage ist der Not-Aus-Taster wie ein herkömmlicher Not-Aus-Taster bedienbar. Die flexible Anschlussleitung 10, 25 wird dabei durch ein geeignetes, nicht näher beschriebenes, Ordnungssystem aufgenommen. Ein solches Ordnungssystem kann beispielsweise ein separater Ablagebehälter oder eine selbstaufwickelnde Kabeltrommel sein.

FIG 4 und FIG 5 zeigen eine Ausführungsform für ein mobiles, funkbasiertes Kommunikationsgerät in Verbindung mit einer Docking-Station. In FIG 4 sind das Kommunikationsgerät 27 und das Not-Aus-Teil 26 in die vorgesehenen Ablagen 37,38 der Docking-Station 36 eingelegt. Dabei kontaktiert das mobile Kommunikationsgerät 27 in üblicher und bekannter Weise mit der Docking-Station 36, um die vorgesehenen Schnittstellen beispielsweise für externe Speichermedien, externe Ein-Ausgabegeräte oder das Netzteil in der Docking-Station 36 zu kontaktieren. Darüber hinaus sind alle Kontaktpunkte der Koppelverbindung 31 zwischen Kommunikationsgerät 27 und Not-Aus-Teil 26 im Kontaktmittel 40 abgebildet. Zusätzlich besitzt die Docking-Station 36 eine Ablage 38 für das Not-Aus-Teil 26. Die Ablage 38 erfüllt die gleiche Aufgabe, wie der unter FIG 3 beschriebene Halter für das Not-Aus-Teil 26. Die Ablage nimmt das Not-Aus-Teil 26 und das flexible Anschlusskabel 25 auf. Zusätzlich stellt die Ablage 38 über das Kontaktmittel 39 eine Kontaktierungsmöglichkeit zwischen Not-Aus-Teil 26 und Docking-Station 36 dar. Damit ist gewährleistet, dass bei eingelegtem Kommunikationsgerät 27 und eingelegtem Not-Aus-Teil 26 die gleiche Funktion sichergestellt ist, wie bei einer direkten Kopplung von Not-Aus-Teil 26 und Kommunikationsgerät 27.

FIG 5 veranschaulicht die direkte Kopplung von Not-Aus-Teil 26 und Kommunikationsgerät 27 in Zusammenhang mit dem Einsatz einer Docking-Station 36. Sowohl Not-Aus-Teil 26 als auch Kommunikationsgerät 27 können im laufenden Betrieb aus der Docking-Station entnommen werden. Über die Koppelverbindung 31 werden beide mechanisch und ggf. elektrisch miteinander verbunden und bilden so eine mobile Funktionseinheit. Die Ablage 38 gibt die flexible Anschlussleitung 25 frei.
In einer nicht dargestellten Ausführungsform kann die Anschlussleitung 25 komplett aus der Ablage 38 entnommen werden. In diesem Falle wäre die mobile Funktionseinheit aus Kommunikationsgerät 27 und Not-Aus-Teil 26 nicht mehr über die Docking-Station 36 sondern direkt mit der Anlage 17 verbunden.

## Patentansprüche

1. Vorrichtung zur Kommunikation mit einer Anlage (1, 17) welche
mindestens ein mobiles Kommunikationsgerät (12, 27) das Daten mit der Anlage (1, 17) austauscht und mindestens einen Not-Aus-Taster (4, 20) aufweist,
**dadurch gekennzeichnet, dass** der Not-Aus-Taster (4, 20) in einem Not-Aus-Teil (11, 26) integriert ist und das Not-Aus-Teil (11, 26) fest verdrahtet mit der Anlage (1, 17) verbunden ist und über eine mechanische Koppelverbindung (16, 31) fest mit dem mobilen Kommunikationsgerät (12,27) gekoppelt eine tragbare Funktionseinheit bildet, die ortsveränderlichen Bedien- und Beobachtungsaufgaben dient.

2. Vorrichtung nach Anspruch 1, **dadurch gekennzeichnet, dass** das Kommunikationsgerät (27) drahtlos mit der Anlage (17) kommuniziert.

3. Vorrichtung nach Anspruch 1 oder 2, **dadurch gekennzeichnet, dass** das Kommunikationsgerät (12, 27) über eine Koppelverbindung (16, 31) elektrisch mit dem Not-Aus-Teil (11, 26) verbunden ist und über dieses mit der Anlage (1, 17) kommuniziert.

4. Vorrichtung nach einem der vorhergehenden Ansprüche, **dadurch gekennzeichnet, dass** das Not-Aus-Teil (11, 26) über eine zumindest teilweise flexible und nicht fest verlegte Anschlussleitung (10, 25) fest mit der Anlage (1, 17) verbunden ist.

5. Vorrichtung nach einem der vorhergehenden Ansprüche, **dadurch gekennzeichnet, dass** das Not-Aus-Teil (11, 26) im gekoppelten Zustand über die Koppelverbindung (16, 31) mit dem Kommunikationsgerät (12, 27) kommuniziert.

6. Vorrichtung nach einem der vorhergehenden Ansprüche, **dadurch gekennzeichnet, dass** im Koppelzustand das Kommunikationsgerät (12, 27) über die Koppelverbindung (16, 31) und die Anschlussleitung (10, 25) stromversorgt wird.

7. Vorrichtung nach einem der vorhergehenden Ansprüche, **dadurch gekennzeichnet, dass** die Vorrichtung einen Halter (35) aufweist, der das Not-Aus-Teil (11,26) einschließlich Anschlussleitung (10, 25) im vom Kommunikationsgerät (12, 27) entkoppelten Zustand aufnimmt.

8. Halter (35) für Not-Aus-Teil (26) nach Anspruch 7, **dadurch gekennzeichnet, dass** der Halter (35) in einer Docking-Station (36) integriert ist.

9. Mobiles Kommunikationsgerät (12, 27) zur Kommunikation mit einer Anlage (1, 17), **dadurch gekennzeichnet, dass** das mobile Kommunikationsgerät (12, 27) über eine mechanische Koppelverbindung (16, 31) fest mit einem Not-Aus-Teil (11, 26) koppelbar ist und mit diesem eine tragbare Funktionseinheit bilden kann, die ortsveränderlichen Bedien-und Beobachtungsaufgaben dient.

10. Mobiles Kommunikationsgerät (12, 27) nach Anspruch 9, **dadurch gekennzeichnet, dass** das mobile Kommunikationsgerät (12, 27) über eine Koppelverbindung (16, 31) elektrisch mit dem Not-Aus-Teil (11, 26) koppelbar ist und über dieses mit der Anlage (1, 17) kommuniziert.

11. Mobiles Kommunikationsgeräte (12, 27) nach Anspruch 10, **dadurch gekennzeichnet, dass** das mobile Kommunikationsgerät (12, 27) im Koppelzustand über die Koppelverbindung (16, 31) stromversorgt wird.

12. Not-Aus-Teil (11, 26) mit einem integrierten Not-Aus-Taster (4, 20) zur Abschaltung einer Anlage (1, 17), wobei das Not-Aus-Teil (11, 26) fest verdrahtet mit der Anlage (1, 17) verbunden ist und über eine mechanische Koppelverbindung (16, 31) fest mit einem mobilen Kommunikationsgerät (12, 27) koppelbar ist und mit diesem eine tragbare Funktionseinheit bilden kann, die ortsveränderlichen Bedien- und Beobachtungsaufgaben dient.

13. Not Aus Teil (11, 26) nach Anspruch 12, **dadurch gekennzeichnet, dass** das Not-Aus-Teil (11, 26) über eine Koppelverbindung (16, 31) elektrisch mit dem Kommunikationsgerät (12, 27) koppelbar ist und mit dem Kommunikationsgerät (12, 27) oder der Anlage (1, 17) kommuniziert.

14. Not Aus Teil (11, 26) nach Anspruch 12 oder 13, **dadurch gekennzeichnet, dass** das Not-Aus-Teil (11, 26) über eine zumindest teilweise flexible und nicht fest verlegte Anschlussleitung (10, 25) fest mit der Anlage verbunden (1, 17) ist.
